# EUROPÄISCHE PATENTANMELDUNG

(11) **EP 1 832 840 A1**
(43) Veröffentlichungstag der Anmeldung: **12.09.2007**
(21) Anmeldenummer: 07004751.9
(22) Anmeldetag: 08.03.2007
(51) Int. Cl.: G01C 11/02, G01C 21/16

(54) **Verfahren zur Erfassung von Topographiedaten**

(30) Priorität: 10.03.2006 AT 4002006
(71) Anmelder: BEWAG GEOSERVICE GMBH, 7000 Eisenstadt (AT)
(72) Erfinder: Bern, Manfred, 7111 Parndorf (AT)
(74) Vertreter: Krause, Peter

(57) **Zusammenfassung**

Die Erfindung betrifft ein Verfahren und eine Einrichtung zur Erfassung von Topographiedaten (3a) und -informationen mit einem eine optoelektronische Einrichtung, insbesondere einen Laserscanner (3), aufweisenden Fortbewegungsmittel, vorzugsweise Fluggerät. Das Fluggerät, insbesondere ein Hubschrauber (1) ist mit einem Positionserfassungssystem (2), beispielsweise GPS (5) oder Glonass System, und einer Datenverarbeitungsanlage (4, 13) versehen. Die mit der optoelektronischen Einrichtung erfassten Topographiedaten (3a) werden mit den vom Positionserfassungssystem (2) erfassten Positionsdaten (2a) in der Datenverarbeitungsanlage (4) verknüpft und in einem Speicher der Datenverarbeitungsanlage (4) für eine weitere Auswertung (10) gespeichert. Die Positionsdaten (2a) werden vor der Verknüpfung mit den Topographiedaten (3a) mit Navigationsdaten (8a) des Fortbewegungsmittels, insbesondere des Fluggerätes, die aus einem Inertial-Navigationssystem (INS) (8) des Fluggerätes generiert werden, verknüpft.

## Beschreibung

Die Erfindung betrifft ein Verfahren zur Erfassung von Topographiedaten und -informationen mit einem eine optoelektronische Einrichtung, insbesondere einen Laserscanner, aufweisenden Fortbewegungsmittel, vorzugsweise Fluggerät und das Fluggerät weiters mit einem Positionserfassungssystem, beispielsweise GPS (Global Position System) oder Glonass System, und einer Datenverarbeitungsanlage versehen ist, wobei die mit der optoelektronischen Einrichtung erfassten Topographiedaten mit den vom Positionserfassungssystem erfassten Positionsdaten in der Datenverarbeitungsanlage verknüpft werden und in einem Speicher der Datenverarbeitungsanlage für eine weitere Auswertung gespeichert werden. Ferner betrifft die Erfindung auch eine Einrichtung zur Durchführung des Verfahrens.

Die Erfassung der Oberflächenbeschaffenheit und die Vermessung der Erdoberfläche haben sich in den letzten Jahren durch den Einsatz von Satellitennavigation, hoch auflösender Digitalfotografie und Laserscanner grundlegend geändert. Waren früher Theodolit und die Berechnung von Polygonzügen das Werkzeug zum Vermessen, ist es heute die Erfassung durch Fotografieren und Laserscanning vom Satellit oder aus dem Flugzeug.

Über den aktuellen Stand der Technik bei der Erfassung der Erdoberfläche kann sich jeder selbst über das Internet ein Bild machen. Da gibt es neben den "Webcams" ein kostenloses Service, mit dem man sich jedes Objekt auf der Erdoberfläche auf dem Bildschirm abbilden lassen kann. Es gibt zwar unterschiedlich große Auflösungen der Bilder und damit der Größe der darauf noch identifizierbaren Objekte, wie etwa Gebäude, Strassen oder Fahrzeuge - die Städte sind wesentlich genauer, als ländliche Gebiete - aber die Genauigkeit z. B. der amerikanischen Städte, wie New York oder Boston ist so groß, dass man problemlos unterscheiden kann, ob die abgebildeten Fahrzeuge in den Straßen Lkws oder Pkws sind.

Wenn man jetzt noch davon ausgeht, dass die Militärs über Datenmaterial verfügen, das noch wesentlich genauer ist und zusätzlich alles in Echtzeit verfolgen können, wird abschätzbar wie leistungsfähig die Erfassung der Oberflächenbeschaffenheit und die Vermessung der Erdoberfläche zur Zeit bereits ist.

Trotzdem ist die Abbildung der Erdoberfläche und der darauf befindlichen Objekte für ganz bestimmte Aufgaben noch zu ungenau.

Die Aufgabe der Erfindung liegt darin, ein Verfahren der eingangs genannten Art zu schaffen, das einerseits die Nachteile der oben aufgezeigten Verfahren vermeidet und das anderseits eine hochpräzise, vollständige, dreidimensionale Darstellung der Topographie in wirtschaftlicher Weise ermöglicht.

Die Aufgabe wird durch die Erfindung gelöst.

Das erfindungsgemäße Verfahren ist dadurch gekennzeichnet, dass die Positionsdaten vor der Verknüpfung mit den Topographiedaten mit Navigationsdaten des Fluggerätes, die aus einem Inertial-Navigationssystem (INS) des Fortbewegungsmittels, insbesondere des Fluggerätes generiert werden, verknüpft werden. Mit der Erfindung ist es erstmals möglich, während der Bewegung die realen, tatsächlichen Positionsdaten des Fortbewegungsmittels, also insbesondere des Fluggerätes, zu erfassen. Nur mit diesen Positionsdaten resultiert aus der Verknüpfung mit den Topographiedaten eine hochgenaue, umfassende, exakte Erfassung von beispielsweise komplexen Objekten oder Bereichen. In Hinblick auf verschiedene Anwendungsgebiete können dadurch aussagefähige Dokumentationen erstellt werden, die Kontrollen ermöglichen, die die Sicherheit entsprechend den heutigen Anforderungen gewährleisten. Die verschiedenen Anwendungsgebiete sind - nur beispielhaft aufgezeigt - Hochspannungsfreileitungen, Gebäude an exponentiellen Orten, Landschaften in Hinblick Hochwasser oder Lawinen, Eisenbahnunterbau o. dgl.

Für nachfolgende Anforderungen ist eine Erfassung und Abbildung der jeweiligen Topografie mit einer sehr hohen Genauigkeit erforderlich:
- die Dokumentation von Gebäudekomplexen oder Industrieanlagen
- die genaue Erfassung des Verlaufs von Strassen- und Eisenbahntrassen
- die Überwachung von Hochspannungsleitungen
- die Ermittlung des Wasserrückhaltevermögens von Uferlandschaften bei Hochwasser
- die Beurteilung der Gefahr von Lawinenabgängen.

Insbesondere den Planern, Errichtern und Haltern von Infrastruktureinrichtungen wie Straßenbauten, Lärmschutzeinrichtungen, Leitungsnetzen, Eisenbahnlinien und Pipelines hilft die Erfindung in einer bisher nicht möglichen Präzision und Wirtschaftlichkeit den steigenden Anforderungen gerecht zu werden.

Ein wesentlicher Vorteil dieser Erfindung ist das rasche Erfassen von großen Datenmengen. Diese Daten können entsprechend den Anforderungen als Punktwolke, als 3D-Modell oder als Zahlenwerte für eine weitere Auswertung zu Verfügung gestellt werden. Natürlich sind auch mit der Erfindung skalierbare Auswertungen, das heißt entweder in höchster Genauigkeit mit einer 2 cm-Genauigkeit oder in definierter Auflösung, möglich.

Wie ja an sich bekannt, helfen 3D-Darstellungen komplexe Daten zu verstehen und erleichtern bzw. beschleunigen Entscheidungsvorgänge. Ebenso erleichtern 3D-Darstellungen die Akzeptanz in den betroffenen Kreisen. Interaktive 3D-Animationen und Simulationen sind natürlich ebenfalls möglich.

Nach einem besonderen Merkmal der Erfindung sind die generierten Navigationsdaten die Beschleunigung, die Geschwindigkeit, die Winkelbeschleunigung, die Raumposition oder die vom Fluggerät zurückgelegte Distanz über Grund oder im absoluten Raum. Wie ja an sich bekannt, beruht die Inertialnavigation auf dem Prinzip der Integration gemessener Beschleunigungen und Drehungen zur Bestimmung von Lagewinken, Geschwindigkeit und Position im Raum. Mit diesen Navigationsdaten des Fortbewegungsmittels werden die GPS bzw. GLONASS Daten, die auf Grund verschiedener Gegebenheiten, wie Veränderungen der Satellitenumlaufbahn bzw. Wetter, nicht exakt sind, prozessiert bzw. korrigiert.

Gemäß einer Ausgestaltung der Erfindung wird die Erfassung der Topographiedaten mit einer Flughöhe von 100 bis 4 000 m, insbesondere von 100 - 300 m, über Grund durchgeführt. Der Vorteil dieser Ausgestaltung liegt darin, dass einerseits eine geringe Laserleistung für den Scannvorgang erforderlich ist und anderseits auch der Laserstrahlwinkel klein gehalten werden kann. Eine präzise Erfassung ist damit gewährleistet.

Nach einem ganz besonderen Merkmal der Erfindung wird vor dem Überfliegen zur Erfassung der Topographiedaten das zu erfassende Gebiet in einem Flugführungsprogramm aufbereitet. Der Vorteil dieses Merkmals liegt darin, dass eine rationelle und wirtschaftliche Erfassung der Daten durchgeführt werden kann.

Gemäß einer besonderen Weiterbildung der Erfindung wird ein digitales Höhenmodell (DHM) des zu erfassenden Gebietes aus den verfügbaren Topographiedaten, beispielsweise aus den im Internet verfügbaren NASA-Daten mit einer Auflösung von drei Breiten- bzw. Längensekunden, erstellt, wobei dieses DHM für eine Einhaltung einer weitgehend konstanten Flughöhe über Grund während des Erfassungsvorganges dient. Die Einhaltung einer konstanten Flughöhe über Grund bringt den Vorteil mit sich, dass der Laserstrahl-Scannbereich ebenfalls relativ konstant gehalten werden kann. Der Fehlerbereich wird dadurch stark beschränkt bzw. minimiert.

Nach einer besonderen Ausgestaltung der Erfindung wird dieses DHM in rechteckigen HITS (highway in the sky) erstellt und diese einzelnen HITS werden in einer Abfolge (tunnel in the sky) dem Fluggerätführer während des Erfassungsvorganges, gegebenenfalls über HUD (headup display) oder ein Head-Mounted Display, eingespielt. Dadurch wird sichergestellt, dass der Fluggerätführer in einfachster Weise seine vorher festgelegte Flugroute auch beibehalten kann.

Gemäß einer weiteren Ausgestaltung der Erfindung wird während der Erfassung der Topographiedaten die Geschwindigkeit (to ground speed) des Fluggerätes konstant gehalten, wobei diese Geschwindigkeit vom Positionserfassungsgerät vorgegeben wird. Auch die weitgehende Konstanthaltung der Geschwindigkeit trägt zur Fehlerminimierung bei.

Nach einem besonderen Merkmal der Erfindung werden die während der Erfassung der Topographiedaten erfassten Positionsdaten von GPS/GLONASS über, aus dem INS stammende, Korrekturfaktoren auf die für die Erfassung der Topographiedaten tatsächliche Flugstrecke und Fluggerätlage im Raum errechnet. Die prozessierten, korrigierten GPS/GLONASS-Positionsdaten werden mit den INS-Daten zu den hochgenauen Flugwegdaten prozessiert. Dadurch werden die laufend mit Fehler behafteten Positionsdaten aus dem Flug korrigiert. Erst diese hochgenauen Flugwegdaten geben die reale, tatsächliche Position des Fluggerätes im Zeitpunkt des Laserscannings wieder.

Gemäß einer vorteilhaften Weiterbildung der Erfindung werden die während des Erfassungsfluges errechneten tatsächlichen Positionsdaten, insbesondere nach der Landung, mit den GPS-Referenzpunktdaten zu den hochgenauen Flugpositionsdaten prozessiert. Eine weitere Korrektur der erfassten Positionsdaten erfolgt in einem post-processing-Prozess. Wie ja allgemein bekannt, unterliegen auch die GPS/GLONASS Daten nicht der gewünschten Genauigkeit. Um diese Fehlerquellen auszuschalten, die sich auf die Genauigkeit auswirken, wird dieser Rechenvorgang durchgeführt.

Gemäß einer weiteren Ausgestaltung der Erfindung werden diese hochgenauen Flugpositionsdaten, die die Position und die Raumlage des Fluggerätes wiedergeben, nach einer Verknüpfung mit den mit der optoelektronischen Einrichtung erfassten Topographiedaten, insbesondere den Laserscanndaten, zu einer hochgenauen 3D-Punkt-Wolke ausgewertet. Aus dieser 3D Punktwolke kann dann in weiterer Folge ein hochgenaues und präzises 3D-Modell, mit einer 2 cm Genauigkeit in den x/y-Achsen, erstellt werden. Natürlich ist es auch möglich, nur die Zahlenwerte für eine Auswertung heranzuziehen.

Gemäß einer Weiterbildung der Erfindung werden in der Datenverarbeitungsanlage die von der optoelektronischen Einrichtung erfassten 3D Pixel-Daten über Algorithmen in 3D Vektor-Daten verarbeitet. Mit diesen 3D Vektor Daten wird dann eine spezifische Auswertung entsprechend den Auftragswünschen durchgeführt.

Nach einem besonderen Merkmal der Erfindung werden die erfassten Daten, wie beispielsweise Positionsdaten, Navigationsdaten und gegebenenfalls Kameradaten, mit einer, vorzugsweise aus der Positionserfassung abgeleiteten, einheitlichen, Zeitmarkierung versehen. Dadurch können die Daten in der Datenverarbeitungsanlage zusammen geführt werden. Ferner wird dadurch ein eindeutiges Gültigkeitsdatum der erfassten Daten gewährleistet.

Nach einer Ausgestaltung der Erfindung wird in der Datenverarbeitungsanlage über Datenlogging eine Plausibilitätskontrolle durchgeführt. Dadurch können einzelne Fehlerpunkte der Punktwolke, so genannte Ausreißer, aus dem Ergebnis eliminiert werden.

Es ist aber auch Aufgabe der Erfindung eine Einrichtung zur Durchführung des Verfahrens zu schaffen, die ebenfalls eine hohe Wirtschaftlichkeit gewährleistet.

Die Aufgabe wird durch die erfindungsgemäße Einrichtung gelöst.

Die Einrichtung zur Erfassung von Topographiedaten und -informationen ist ein eine optoelektronische Einrichtung, insbesondere einen Laserscanner, aufweisendes Fortbewegungsmittel, vorzugsweise ein Fluggerät, wobei das Fluggerät weiters mit einem Positionserfassungssystem, beispielsweise GPS (Global Position System) oder Glonass System, und einer Datenverarbeitungsanlage, insbesondere ein Datenspeicher, versehen ist. Die erfindungsgemäße Einrichtung ist dadurch gekennzeichnet, dass im Fluggerät ein Inertial-Navigationssystem (INS) vorgesehen ist. Mit dieser erfindungsgemäßen Einrichtung ist es erstmals möglich die Topographiedaten und -informationen mit einer äußerst hohen Dokumentationsgenauigkeit zu erfassen, d.h. die Daten werden vollständig, direkt, wirtschaftlich und mit höchster Genauigkeit erfasst. Fehler die auf fehlerhaften Positionsdaten beruhen, werden substituiert. Die Ergebnisse können verschiedenartig sicher dokumentiert und dargestellt werden - wie zum Beispiel als Grundriss, Schnittzeichnung, 3D Modell, photorealistische Animation oder Panoramabild.

Gemäß einer Weiterbildung der Erfindung ist im Fluggerät eine Kamera, vorzugsweise eine Videokamera und/oder Digitalkamera, vorgesehen. Dadurch können in vorteilhafterweise die in der Datenverarbeitungsanlage erstellten Daten noch besser dokumentiert werden.

Nach einer weiteren besonderen Ausgestaltung der Erfindung ist im Fluggerät eine Coronakamera vorgesehen. Mit der Coronakamera können Unregelmäßigkeiten der Leiteroberfläche, die zum Bruch einzelner Drahtlitzen und in weiterer Folge zum Riss der Leitung führen, delektiert werden. Insbesondere den Energieversorgungsunternehmen hilft die Erfindung in einer bisher nicht mögliche Präzision und Wirtschaftlichkeit, ihre Freileitungsnetz zu überwachen und zu dokumentieren, um den jeweiligen Kunden eine optimale Sicherheit und Leistungsfähigkeit zu garantieren und so den ständig steigenden Ansprüchen gerecht zu werden.

Gemäß einer alternativen Ausgestaltung der Erfindung ist im Fluggerät eine Infrarotkamera vorgesehen. Damit können im Zusammenwirken mit den Topographiedaten hochpräzise Thermoprofile erstellt werden.

Nach einer ganz besonderen Ausgestaltung der Erfindung ist im Fluggerät eine Gasspürsensorik vorgesehen. Insbesondere beim Erfassen von Pipelinetrassen kann in Zusammenhang mit einer Gasspürsensorik die Dichtheit der Pipelines bzw. mögliche undichte Stellen in kürzester Zeit geortet werden.

In einer weiteren alternativen Ausgestaltung der Erfindung ist ein Temperaturerfassungsgerät vorgesehen. Zur Erstellung von Thermobildern ist ein Temperaturmessgerät von Vorteil.

Gemäß einer besonderen Ausgestaltung der Erfindung ist im Fluggerät eine redundante Stromversorgung gegebenenfalls mit mindestens einer Pufferbatterie vorgesehen. Diese Ausgestaltung ist in Hinblick auf eine sichere Funktionalität und der Betriebssicherheit der Einrichtung von Vorteil.

Nach einem besonderen Merkmal der Erfindung ist das Fluggerät ein Hubschrauber, insbesondere ein Zwei-Turbinen, Mehr-Blatt-, vorzugsweise ein Vier-Blatt-Hubschrauber. Mit einem derartigen Fluggerät können die gestellten Anforderungen an Genauigkeit und Wirtschaftlichkeit problemlos erfüllt werden.

Gemäß einer weiteren Ausgestaltung der Erfindung ist die Antenne für das GPS oder GLONASS auf der Nase des Fluggerätes vorgesehen. Dadurch ist der Vorteil gegeben, dass die entsprechenden Signale mit hoher Qualität erfasst werden. Nach einer Weiterbildung der Erfindung ist die optoelektronische Einrichtung ein Laserscanner, der vorzugsweise eine Pulsfrequenz von 80 kHz aufweist und insbesondere in Echtzeit und insbesondere im WGS 84 Format aufzeichnet. Dadurch werden hochgenaue, präzise Auswertungen rationell möglich.

Gemäß einem weiteren besonderen Merkmal der Erfindung weist der Laserscanner einen einstellbaren Öffnungswinkel auf. Dadurch ist der Vorteil gegeben, dass der Laserstrahl den Anwendungen entsprechend angepasst werden kann.

Nach einer Weiterbildung der Erfindung ist die optoelektronische Einrichtung im Laderaum des Fluggerätes angeordnet. Insbesondere bei einem Hubschrauber ist damit eine einfache Aufrüstung gewährleistet.

Gemäß einem weiteren besonderen Merkmal der Erfindung erfolgt die Parametrierung bzw. Kalibrierung der optoelektronischen Einrichtung über ein Kalibrierungsmessfeld mit Methoden der Mustererkennung und/oder Stochastik. Dadurch wird die Parametrierung bzw. Kalibrierung in einfachster Weise durchgeführt.

Entsprechend einer Alternative der Erfindung ist das Fortbewegungsmittel ein Flächenflugzeug, ein Tragschrauber oder ein Luftschiff. Damit ist der Vorteil gegeben, dass großflächige Gebiete in kürzester Zeit topographisch erfasst werden können.

Einer weiteren Alternative der Erfindung entsprechend ist das Fortbewegungsmittel eine Eisenbahn. Damit können hochgenaue Tunnelprofile erstellt werden und kleinste Bewegungen im Gestein in einfacher und wirtschaftlicher Weise frühzeitig erkannt werden. Es liegt durchaus auch im Bereich der Erfindung Tunnel-Topographien zu erstellen.

Eine abschließende Alternative der Erfindung ist es, dass das Fortbewegungsmittel ein Fahrzeug zu Land oder Wasser, insbesondere ein Schiff, ist. Dadurch kann das Profil von Grotten oder unterirdische Flüsse und Karstquellen wirtschaftlich erfasst werden.

Nach einem besonderen Merkmal der Erfindung sind der Laserscanner und das INS auf einer Achse gemeinsam drehbar angeordnet, wobei die Drehachse durch die Zentren des Laserscanners und des INS geht. Eine derartige Vorrichtung hat sich als ideal erwiesen, wenn der Laserscanner für die Erfassung von stark geneigten Flächen, wie Berghänge o. dgl. eingesetzt wird. Durch diese Ausgestaltung kann der Laserscanner verschwenkt werden, wobei das INS auch diese Raumlagen erfasst.

Entsprechend einer besonderen Ausgestaltung der Erfindung ist der Laserscanner und das INS in einem Rohr mit Aussparungen für den Laserstrahl angeordnet, wobei dieses Rohr in einem weiteren Rohr, das ebenfall Ausschnitte für den Laserstrahl aufweist, koaxial drehbar ist und diese Vorrichtung vorzugsweise am Hubschrauber montiert ist. Mit dieser einfachen Vorrichtung können die stark geneigten Flächen in einfachster Weise erfasst werden. Diese Ausgestaltung ist eine äußerst wirtschaftliche Lösung.

Die Erfindung wird an Hand von Ausführungsbeispielen, die in der Zeichnung dargestellt sind, näher erläutert.

Es zeigen:
Fig. 1 eine schematische Darstellung zur Erfassung von Topographiedaten und -informationen,
Fig. 2 ein schematischer Ablauf des Verfahrens.

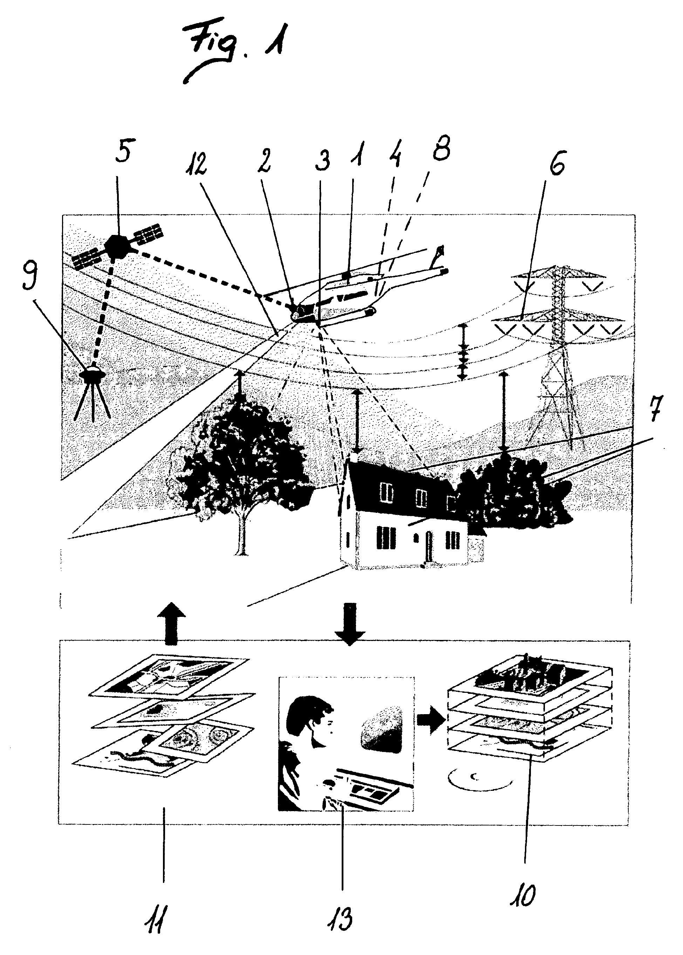

Gemäß der Fig. 1 ist zur Erfassung von Topographiedaten und -informationen, wie beispielsweise Gebäude 7 oder Hochspannungsleitungen 6, aus der Luft ein Fluggerät, insbesondere ein Hubschrauber 1, vorgesehen. Dieser Hubschrauber 1 ist mit einem Positionserfassungssystem 2, beispielsweise für GPS 5 (Global Position System) oder das Glonass System, ausgestattet. Ferner ist in dem Hubschrauber 1 eine optoelektronische Einrichtung, insbesondere ein Laserscanner 3, vorgesehen. Zur Verarbeitung der erfassten Daten ist eine Datenverarbeitungsanlage 4, 13 vorgesehen. Die Datenverarbeitungsanlage 4, 13 kann - wie später noch aufgezeigt wird - aus zwei Anlagen, einem Bordrechner 4 und einer am Boden vorgesehenen stationären Anlage 13 bestehen.

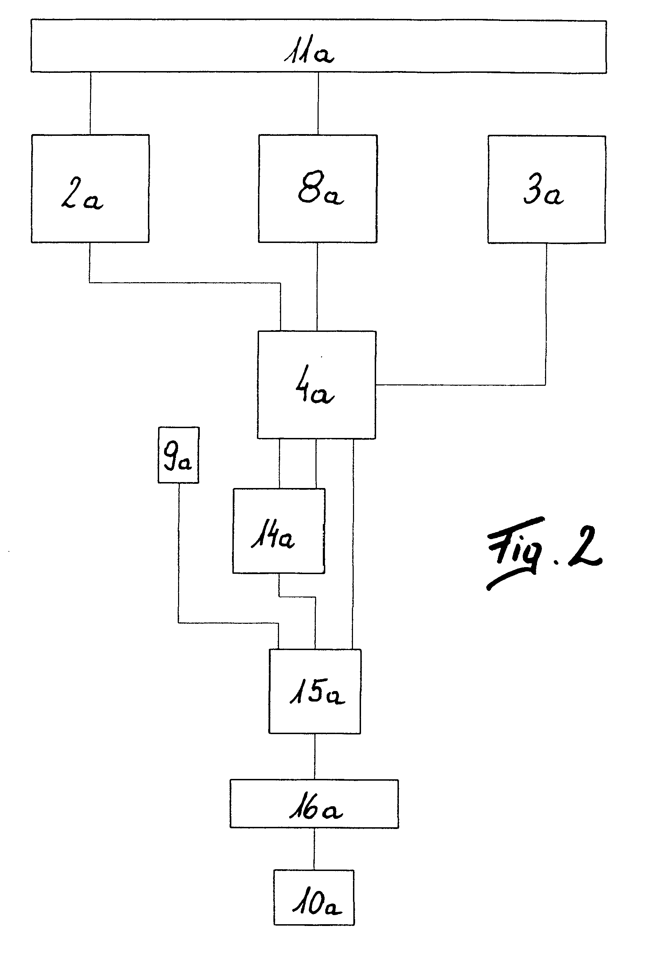

In weiterer Folge wird zur Fig. 1 auf den schematischen Verfahrensablauf der einzelnen Daten gemäß Fig. 2 verwiesen. Die aus den einzelnen Komponenten stammenden Daten werden mit dem Kleinbuchstaben a bezeichnet.

Wie ja an sich bekannt, weichen die während des Fluges mit dem Positionserfassungssystem 2 erfassten Positionsdaten 2a, beispielsweise vom GPS 5, zumindest nach einiger Flugzeit, von den realen, tatsächlichen Flugwegdaten ab.

In der Datenverarbeitung 4a werden die Positionsdaten 2a, die Navigationsdaten 8a und die Topographiedaten 3a, insbesondere jeder Datensatz für sich, gespeichert.

Um nun zu einem hoch exakten Ergebnis der mit dem Laserscanner 3 erfassten Topographiedaten 3a, beispielsweise der Hochspannungsleitung 6, zu kommen, werden diese während des Fluges erfassten Positionsdaten 2a in der Datenverarbeitung 4a korrigiert. Zur Korrektur werden Navigationsdaten 8a, die aus einem, ebenfalls im Fluggerät vorgesehenen Inertial-Navigationssystem (INS) 8 generiert werden, verwendet.

Die generierten Navigationsdaten 8a aus dem INS 8 sind die Beschleunigung, die Geschwindigkeit, die Winkelbeschleunigung, die Raumposition oder die vom Fluggerät zurückgelegte Distanz über Grund oder im absoluten Raum. Verknüpft man diese Navigationsdaten 8a mit den während des Fluges erfassten Positionsdaten 2a, so kommt man den tatsächlichen Flugwegdaten 14a schon sehr nahe. Um nun die realen, tatsächlichen Flugwegdaten bzw. Positionsdaten 15a, auch des Hubschraubers 1 im Raum, zu erhalten, werden diese mit GPS-Referenzpunktdaten 9a zu den hochgenauen Flugwegpositionsdaten 15a prozessiert.

Erst diese hochgenauen Flugwegpositionsdaten 15a werden mit den erfassten Topographiedaten aus dem Laserscanner 3 in einer Datenverarbeitungsanlage 13 verknüpft. In der Datenverarbeitungsanlage 13 werden auch die von der optoelektronischen Einrichtung erfassten 3D Pixel-Daten über Algorithmen in 3D Vektor-Daten 16a verarbeitet.

Nach dieser Datenverknüpfung erfolgt eine Auswertung 10a entsprechend den gestellten Anforderungen. Die Auswertung 10 kann in einer hochgenauen 3D-Punkt-Wolke sein. Aus dieser 3D Punktwolke kann dann in weiterer Folge ein hochgenaues und präzises 3D-Modell erstellt werden. Natürlich ist es auch möglich, nur die Zahlenwerte für eine Auswertung 10 heranzuziehen.

Um nun für ein gewünschtes Gebiet, sei es beispielsweise ein Raumordnungsgebiet oder eine Hochspannungsleitung 6, einen rationellen Erfassungsvorgang zu erhalten, wird im Vorfeld ein Flugführungsprogramm 11 a erstellt. Es wird ein digitales Höhenmodell (DHM) des zu erfassenden Gebietes aus den verfügbaren Topographiedaten, beispielsweise aus den im Internet verfügbaren NASA-Daten mit einer Auflösung von drei Breiten- bzw. Längensekunden, erstellt. Weiters wird dieses DHM in rechteckigen HITS (highway in the sky) erstellt und diese einzelnen HITS werden in einer Abfolge (tunnel in the sky) dem Fluggerätführer während des Erfassungsvorganges, gegebenenfalls über HUD (headup display) oder ein Head-Mounted Display, eingespielt. Diese Vorgangsweise dient für eine Einhaltung einer weitgehend konstanten Flughöhe über Grund während des Erfassungsvorganges. Als eine optimale Flughöhe mit einem Hubschrauber 1 haben sich 100-300 m über Grund heraus kristallisiert. Mit einem Flächenflieger können die Flughöhen bis 4 000 m betragen. Auch aus dieser Höhe sind noch exzellente Auswertungen 10 möglich.

Ferner wird während der Erfassung der Topographiedaten 3a die Geschwindigkeit (to ground speed) des Fluggerätes konstant gehalten, wobei diese Geschwindigkeit vom Positionserfassungsgerät 2, also über das GPS/Glonass 5, vorgegeben wird.

Sowohl die konstante Flughöhe, wie auch die konstante Fluggeschwindigkeit tragen zur Erhaltung eines hoch exakten Ergebnisses bei. Um eine hoch genaue Datenzusammenführung zu gewährleisten, werden die erfassten Daten, wie beispielsweise Positionsdaten, Navigationsdaten und gegebenenfalls Kameradaten, mit einer, vorzugsweise aus der Positionserfassung abgeleiteten, einheitlichen Zeitmarkierung versehen. Diese Zeitmarkierung wird in vorteilhafterweise vom GPS 5, das über eine Atomuhr verfügt, abgeleitet.

Das Flugführungsprogramm 11a übernimmt auch während des Erfassungsfluges Positionsdaten 2a bzw. Navigationsdaten 8a für die Standortbestimmung.

Das oben aufgezeigte Verfahren kann in verschiedenen Varianten ablaufen, wobei das Ergebnis dadurch nicht beeinflusst wird.

In der einfachsten Variante werden die im Hubschrauber 1 erfassten Daten, wie Positionsdaten 2a, Navigationsdaten 8a und Topographiedaten 3a in jeweiligen Speichern abgelegt und nach der Landung miteinander gemäß den obigen Schritten verarbeitet.

Es ist aber durchaus im Bereich der Erfindung, dass die erwähnten Daten unmittelbar während des Fluges verarbeitet werden.

Eine weitere Möglichkeit besteht darin, dass während des Fluges beispielsweise nur die Positionsdaten 2a und die Navigationsdaten 8a verknüpft werden und über Datenlogging eine Plausibilitätskontrolle vom Operator über eine Visualisierung durchgeführt wird. Damit kann schon weitgehenst während des Erfassungsfluges eine Aussage über Qualität und gegebenenfalls Quantität getroffen werden.

Zur Durchführung des Verfahrens ist eine Einrichtung bestehend aus Komponenten in einem Fortbewegungsmittel vorgesehen.
Eine nachstehend beispielhaft aufgezeigte Einrichtung in einem Hubschrauber 1 hat optimale Ergebnisse gebracht.

Der Hubschrauber1 ist ein Zwei-Turbinen, Mehr-Blatt-, vorzugsweise ein Vier-Blatt-Hubschrauber1, wobei die Antenne für das GPS 5 oder GLONASS auf der Nase des Hubschraubers 1 vorgesehen ist. Im Hubschrauber 1 ist auch eine redundante Stromversorgung gegebenenfalls mit mindestens einer Pufferbatterie vorgesehen.

Entsprechend einer besonderen Ausgestaltung ist der Laserscanner 3 und das INS 8 in einem Rohr mit Aussparungen für den Laserstrahl angeordnet. Dieses Rohr ist in einem weiteren Rohr koaxial drehbar. Montiert ist diese Vorrichtung vorzugsweise am Hubschrauber 1. Eine derartige Vorrichtung hat sich als ideal erwiesen, wenn der Laserscanner 3 für die Erfassung von stark geneigten Flächen, wie Berghänge o. dgl. eingesetzt wird. Durch diese Ausgestaltung kann der Laserscanner 3 verschwenkt werden, wobei das INS 8 auch diese Raumlagen erfasst.

Der Laserscanner 3 weist vorzugsweise eine Pulsfrequenz von 80 kHz auf und zeichnet insbesondere in Echtzeit und insbesondere im WGS 84 Format auf und hat einen einstellbaren Öffnungswinkel. Der Laserscanner 3 ist im Laderaum des Hubschraubers 1 angeordnet. Die Parametrierung bzw. Kalibrierung des Laserscanners 3 erfolgt über ein Kalibrierungsmessfeld mit Methoden der Mustererkennung und/oder Stochastik.

Für verschiedene Anwendungszwecke kann die Grundausstattung der Einrichtung erweitert werden. So ist es sicher von Vorteil, wenn für Topographien beispielsweise einer Raumordnung eine Video-, Infrarot- oder eine Digitalkamera 12 vorgesehen wird.

Bei der Erfassung von Hochspannungsleitungen 6 ist das Vorsehen einer Coronakamera zweckmäßig. Eine weitere Ergänzung im Zuge der Erfassung von Hochspannungsleitungen 6 ist ein Temperaturerfassungsgerät. Die Temperatur kann über an der Hochspannungsleitung 6 vorgesehene Temperaturmessstreifen ausgewertet werden.

Es liegt durchaus im Bereich der Erfindung, dass entlang einer Pipeline Gasaustritte mit einer Gasspürsensorik detektiert werden.

Natürlich ist das Fortbewegungsmittel nicht auf Fluggeräte, wie Hubschrauber 1, Flächenflieger oder Luftschiffe begrenzt. Die Einrichtung zur Erfassung von Topographiedaten 3a und -informationen kann natürlich auch auf Eisenbahnen zum Detektieren von Tunneln oder Schiffen zum Erfassen von Grotten o. dgl. angeordnet werden.

Denkbar für spezielle Aufgaben sind auch Sonderfahrzeuge zu Land.

## Patentansprüche

1. Verfahren zur Erfassung von Topographiedaten und -informationen mit einem eine optoelektronische Einrichtung, insbesondere einen Laserscanner, aufweisenden Fortbewegungsmittel, vorzugsweise Fluggerät und das Fluggerät weiters mit einem Positionserfassungssystem, beispielsweise GPS (Global Position System) oder Glonass System, und einer Datenverarbeitungsanlage versehen ist, wobei die mit der optoelektronischen Einrichtung erfassten Topographiedaten mit den vom Positionserfassungssystem erfassten Positionsdaten in der Datenverarbeitungsanlage verknüpft werden und in einem Speicher der Datenverarbeitungsanlage für eine weitere Auswertung gespeichert werden, **dadurch gekennzeichnet, dass** die Positionsdaten (2a) vor der Verknüpfung mit den Topographiedaten (3a) mit Navigationsdaten (8a) des Fortbewegungsmittels, insbesondere des Fluggerätes, die aus einem Inertial-Navigationssystem (INS) (8) des Fluggerätes generiert werden, verknüpft werden.

2. Verfahren nach Anspruch 1, **dadurch gekennzeichnet, dass** die generierten Navigationsdaten (8a) die Beschleunigung, die Geschwindigkeit, die Winkelbeschleunigung, die Raumposition oder die vom Fluggerät zurückgelegte Distanz über Grund oder im absoluten Raum sind.

3. Verfahren nach Anspruch 1 oder 2, **dadurch gekennzeichnet, dass** die Erfassung der Topographiedaten (3a) mit einer Flughöhe von 100 bis 4 000 m, insbesondere von 100 - 300 m, über Grund durchgeführt wird.

4. Verfahren nach einem oder mehreren der Ansprüche 1 bis 3, **dadurch gekennzeichnet, dass** vor dem Überfliegen zur Erfassung der Topographiedaten (3a) das zu erfassende Gebiet in einem Flugführungsprogramm (11a) aufbereitet wird.

5. Verfahren nach Anspruch 4, **dadurch gekennzeichnet, dass** ein digitales Höhenmodell (DHM) des zu erfassenden Gebietes aus den verfügbaren Topographiedaten, beispielsweise aus den im Internet verfügbaren NASA-Daten mit einer Auflösung von drei Breiten- bzw. Längensekunden, erstellt wird, wobei dieses DHM für eine Einhaltung einer weitgehend konstanten Flughöhe über Grund während des Erfassungsvorganges dient.

6. Verfahren nach Anspruch 4oder 5, **dadurch gekennzeichnet, dass** dieses DHM in rechteckigen HITS (highway in the sky) erstellt wird und diese einzelnen HITS in einer Abfolge (tunnel in the sky) dem Fluggerätführer während des Erfassungsvorganges, gegebenenfalls über HUD (headup display) oder ein Head-Mounted Display, eingespielt werden.

7. Verfahren nach einem oder mehreren der Ansprüche 1 bis 6, **dadurch gekennzeichnet, dass** während der Erfassung der Topographiedaten (3a) die Geschwindigkeit (to ground speed) des Fluggerätes konstant gehalten wird, wobei diese Geschwindigkeit vom Positionserfassungsgerät (2) vorgegeben wird.

8. Verfahren nach einem oder mehreren der Ansprüche 1 bis 7, **dadurch gekennzeichnet, dass** die während der Erfassung der Topographiedaten (3a) erfassten Positionsdaten (2a) von GPS/GLONASS (5) über, aus dem INS (8) stammende, Korrekturfaktoren auf die für die Erfassung der Topographiedaten (3a) tatsächliche Flugstrecke und Fluggerätlage im Raum errechnet werden (14a).

9. Verfahren nach einem oder mehreren der Ansprüche 1 bis 8, **dadurch gekennzeichnet, dass** die während des Erfassungsfluges errechneten tatsächlichen Positionsdaten (14a), insbesondere nach der Landung, mit den GPS-Referenzpunktdaten (9a) zu den hochgenauen Flugpositionsdaten (15a) prozessiert werden.

10. Verfahren nach einem oder mehreren der Ansprüche 1 bis 9, **dadurch gekennzeichnet, dass** diese hochgenauen Flugpositionsdaten (15a), die die Position und die Raumlage des Fluggerätes wiedergeben, nach einer Verknüpfung mit den mit der optoelektronischen Einrichtung erfassten Topographiedaten (3a), insbesondere den Laserscanndaten, zu einer hochgenauen 3D-Punkt-Wolke (10a) ausgewertet werden.

11. Verfahren nach einem oder mehreren der Ansprüche 1 bis 10, **dadurch gekennzeichnet, dass** in der Datenverarbeitungsanlage (4, 13) die von der optoelektronischen Einrichtung erfassten 3D Pixel-Daten über Algorithmen in 3D Vektor-Daten (16a) verarbeitet werden.

12. Verfahren nach einem oder mehreren der Ansprüche 1 bis 11, **dadurch gekennzeichnet, dass** die erfassten Daten, wie beispielsweise Positionsdaten (2a), Navigationsdaten (8a) und gegebenenfalls Kameradaten, mit einer, vorzugsweise aus der Positionserfassung abgeleiteten, einheitlichen Zeitmarkierung versehen werden.

13. Verfahren nach einem oder mehreren der Ansprüche 1 bis 12, **dadurch gekennzeichnet, dass** in der Datenverarbeitungsanlage (4) über Datenlogging eine Plausibilitätskontrolle durchgeführt wird.

14. Einrichtung zur Durchführung des Verfahrens nach einem oder mehreren der Ansprüche 1 bis 13, wobei zur Erfassung von Topographiedaten (3a) und -informationen ein eine optoelektronische Einrichtung, insbesondere einen Laserscanner (3), aufweisendes Fortbewegungsmittel, vorzugsweise ein Fluggerät, vorgesehen ist und das Fluggerät weiters mit einem Positionserfassungssystem (2), beispielsweise GPS (Global Position System) (5) oder Glonass System, und einer Datenverarbeitungsanlage (4, 13), insbesondere mindestens einem Datenspeicher, versehen ist, **dadurch gekennzeichnet, dass** im Fluggerät ein Inertial-Navigationssystem (INS) (8) vorgesehen ist.

15. Einrichtung nach Anspruch 14, **dadurch gekennzeichnet, dass** im Fluggerät eine Kamera, vorzugsweise eine Videokamera und/oder Digitalkamera (12), vorgesehen ist.

16. Einrichtung nach einem oder mehreren der Ansprüche 13 bis 15, **dadurch gekennzeichnet, dass** im Fluggerät eine Coronakamera vorgesehen ist.

17. Einrichtung nach einem oder mehreren der Ansprüche 13 bis 16, **dadurch gekennzeichnet, dass** im Fluggerät eine Infrarotkamera vorgesehen ist.

18. Einrichtung nach einem oder mehreren der Ansprüche 13 bis 17, **dadurch gekennzeichnet, dass** im Fluggerät eine Gasspürsensorik vorgesehen ist.

19. Einrichtung nach einem oder mehreren der Ansprüche 13 bis 18, **dadurch gekennzeichnet, dass** ein Temperaturerfassungsgerät vorgesehen ist.

20. Einrichtung nach einem oder mehreren der Ansprüche 13 bis 19, **dadurch gekennzeichnet, dass** im Fluggerät eine redundante Stromversorgung gegebenenfalls mit mindestens einer Pufferbatterie vorgesehen ist.

21. Einrichtung nach einem oder mehreren der Ansprüche 13 bis 20, **dadurch gekennzeichnet, dass** das Fluggerät ein Hubschrauber (1), insbesondere ein Zwei-Turbinen, Mehr-Blatt-, vorzugsweise ein Vier-Blatt-Hubschrauber, ist.

22. Einrichtung nach einem oder mehreren der Ansprüche 13 bis 21, **dadurch gekennzeichnet, dass** die Antenne für das GPS oder GLONASS auf der Nase des Fluggerätes vorgesehen ist.

23. Einrichtung nach einem oder mehreren der Ansprüche 13 bis 22, **dadurch gekennzeichnet, dass** die optoelektronische Einrichtung ein Laserscanner (3) ist, der vorzugsweise eine Pulsfrequenz von 80 kHz aufweist und insbesondere in Echtzeit und insbesondere im WGS 84 Format aufzeichnet.

24. Einrichtung nach einem oder mehreren der Ansprüche 13 bis 23, **dadurch gekennzeichnet, dass** der Laserscanner (3) einen einstellbaren Öffnungswinkel aufweist.

25. Einrichtung nach einem oder mehreren der Ansprüche 13 bis 24, **dadurch gekennzeichnet, dass** die optoelektronische Einrichtung im Laderaum des Fluggerätes angeordnet ist.

26. Einrichtung nach einem oder mehreren der Ansprüche 13 bis 25, **dadurch gekennzeichnet, dass** die Parametrierung bzw. Kalibrierung der optoelektronischen Einrichtung über ein Kalibrierungsmessfeld mit Methoden der Mustererkennung und/oder Stochastik erfolgt.

27. Einrichtung nach einem oder mehreren der Ansprüche 13 bis 26, **dadurch gekennzeichnet, dass** das Fortbewegungsmittel ein Flächenflugzeug, ein Tragschrauber oder ein Luftschiff ist.

28. Einrichtung nach einem oder mehreren der Ansprüche 13 bis 27, **dadurch gekennzeichnet, dass** das Fortbewegungsmittel eine Eisenbahn ist.

29. Einrichtung nach einem oder mehreren der Ansprüche 13 bis 28, **dadurch gekennzeichnet, dass** das Fortbewegungsmittel ein Fahrzeug zu Land oder Wasser, insbesondere ein Schiff, ist.

30. Einrichtung nach einem oder mehreren der Ansprüche 13 bis 29, **dadurch gekennzeichnet, dass** der Laserscanner (3) und das INS (8) auf einer Achse gemeinsam drehbar angeordnet sind, wobei die Drehachse durch die Zentren des Laserscanners (3) und des INS (8) geht.

31. Einrichtung nach Anspruch 30, **dadurch gekennzeichnet, dass** der Laserscanner (3) und das INS (8) in einem Rohr mit Aussparungen für den Laserstrahl angeordnet sind, wobei dieses Rohr in einem weiteren Rohr koaxial drehbar ist und diese Vorrichtung vorzugsweise am Hubschrauber (1) montiert ist.
